# EUROPÄISCHE PATENTANMELDUNG

(11) **EP 3 012 662 A1**
(43) Veröffentlichungstag der Anmeldung: **27.04.2016**
(21) Anmeldenummer: 15184584.9
(22) Anmeldetag: 10.09.2015
(51) Int. Cl.: G01S 17/42, G01S 17/93, G01S 7/481, G01S 17/87, B60R 21/015

(54) **OPTOELEKTRONISCHE DETEKTIONSEINRICHTUNG UND VERFAHREN ZUM BETRIEB EINER SOLCHEN DETEKTIONSEINRICHTUNG SOWIE KRAFTFAHRZEUG**

(30) Priorität: 22.10.2014 DE 102014115408
(71) Anmelder: Valeo Schalter und Sensoren GmbH, 74321 Bietigheim-Bissingen (DE)
(72) Erfinder: Schuler, Thomas, 74321 Bietigheim-Bissingen (DE)

(57) **Zusammenfassung**

Die Erfindung betrifft eine optoelektronische Detektionseinrichtung 2 für ein Kraftfahrzeug mit einer Sende- und Empfangseinheit 14, welche einen ersten optischen Sender zum Aussenden elektromagnetischer Sendestrahlen 4 in die Umgebung der Detektionseinrichtung 2 und einen optischen Empfänger 5 zum Empfangen von Strahlen 6 aufweist. Der optische Empfänger 5 weist mindestens einen optoelektronischen Detektor 7 auf und stellt einer Auswertungselektronik 8 einen in Abhängigkeit der empfangenen Strahlen 6 gebildetes Empfangssignal 9 bereit.

Die Erfindung betrifft außerdem ein Verfahren zum Betrieb einer solchen Detektionseinrichtung 2 sowie ein Kraftfahrzeug mit einer solchen Detektionseinrichtung2.

Um den baulichen Aufwand der Detektionseinrichtung zu verringern, ist erfindungsgemäß vorgesehen, dass die Sende- und Empfangseinheit 14 einen zweiten optischen Sender 12 zum Aussenden elektromagnetischen Sendestrahlen 6' in die Umgebung der Detektionseinrichtung 2 aufweist, welcher einem anderen Detektionsbereich der Umgebung der Detektionseinrichtung 2 zugeordnet ist, als der erste optische Sender 3. Die Auswertungselektronik 8 ist dabei derart ausgebildet, dass die empfangenen Strahlen 6, 6' einem der optischen Sender 3, 12 zugeordnet werden.

## Beschreibung

Die Erfindung betrifft eine optoelektronische Detektionseinrichtung für ein Kraftfahrzeug gemäß dem Oberbegriff des Anspruchs 1. Die Erfindung betrifft außerdem ein Verfahren zum Betrieb einer solchen Detektionseinrichtung gemäß Anspruch 6. Die Erfindung betrifft außerdem ein Kraftfahrzeug mit einer solchen Detektionseinrichtung gemäß Anspruch 9.

Optoelektronische Detektionseinrichtungen umfassen eine Sende- und Empfangseinheit, welche einen optischen Sender zum Aussenden elektromagnetischer Sendestrahlen in die Umgebung der Detektionseinrichtung und einen optischen Empfänger zum Empfangen von Strahlen auf. Der Empfänger weist hierzu mindestens einen optoelektronischen Detektor auf, beispielsweise Fotodioden, und stellt einer Auswertungselektronik einen in Abhängigkeit der empfangenen Strahlen gebildetes Empfangssignal bereit. Erkennt die Auswertungselektronik anhand des Empfangssignals das Ereignis des Empfangs eines elektromagnetischen Strahls, so können daraus Rückschlüsse gezogen werden und in der Fahrzeugelektronik weiterverarbeitet werden. Beispielsweise kann bei einer Detektion nach dem Prinzip der Lichtlaufzeitmessung die Laufzeit zwischen dem Senden und Empfangen von Strahlen gemessen werden um daraus einen Rückschluss auf die Entfernung eines reflektierenden Objekts zu ziehen.

Derartige optoelektronische Detektionseinrichtungen werden beispielsweise in Fahrerassistenzsysteme im Automobilbereich eingesetzt, um den Fahrer beim Führen seines Kraftfahrzeugs zu unterstützen. Eine als Laserscanner ausgebildete Detektionseinrichtung ist beispielsweise aus DE 10 2012 020 288 A1 bekannt. Der bekannte Laserscanner arbeitet nach dem Lichtlaufzeitprinzip, wobei der optische Sender kurze Laserimpulse aussendet. Die Laserimpulse werden über einen drehbaren Spiegel so in die Umgebung des Kraftfahrzeugs abgelenkt, dass eine Abtastung des gesamten Sichtfelds innerhalb eines vorbestimmten Abtastwinkelbereichs stattfindet. Pro Abtastwinkel beziehungsweise pro Winkelschritt wird dabei ein Laserimpuls ausgesendet. Im selben Winkelschritt werden die an Objekten in der Umgebung des Kraftfahrzeugs reflektierten Strahlen mittels des Empfängers empfangen und ein elektrisches Empfangssignal bereitgestellt. Werden Echos, beziehungsweise Pulse im Empfangssignal erkannt, so sind diese Grundsätzlich auf Reflektionen des ausgesendeten Laserimpulses an Zielobjekten in der Umgebung zurückzuführen. Die Zeitdauer zwischen dem Aussenden des Laserimpulses und dem Empfangen des des Echos ist proportional zur Distanz zum Objekt. Die Lichtlaufzeit wird gemessen und das Ergebnis der Entfernungsmessung für diesen Winkelschritt abgelegt und bei der Auswertung berücksichtigt.

Derartige Laser-basierte Systeme sind unter der Bezeichnung "LIDAR" ("Light detection and ranging") bekannt und dienen der optischen Abstands- und Geschwindigkeitsmessung. Die Detektionseinrichtung wird beispielsweise im vorderen Bereich des Fahrzeugs platziert, wie etwa hinter der Windschutzscheibe oder am Kühlergrill, unter anderem die Zeit bis zum Aufprall zu ermitteln. Solche Systeme können aber auch im seitlichen Bereich des Fahrzeugs platziert werden, um insbesondere den Totwinkel des Kraftfahrzeugs zu überwachen. LIDAR-Systeme werden außerdem beispielsweise zur Totwinkelüberwachung, zur Kollisionswarnung oder Abstandsregelung oder weiteren aktiven oder passiven Fahrerassistenzsystemen verwendet.

Im Automobilbereich bestehen eine Vielzahl von Anwendungsmöglichkeiten für optoelektronische Detektionseinrichtung zur Überwachung/Steuerung bestimmter Vorgänge, wobei oft mehrere Detektionseinrichtungen eingesetzt werden und deren Detektionsergebnisse für bestimmte Anwendungen beispielsweise in Fahrerassistenzsystemen herangezogen werden. Bei bekannten Systemen werden für jede Detektionseinrichtung jeweils Sende- und Empfangseinheiten mit jeweils einem optischen Sender und einem optischen Empfänger eingesetzt, welche auf einander abgestimmt sind.

Der vorliegenden Erfindung liegt die Aufgabe zugrunde, den baulichen Aufwand für optoelektronische Detektionseinrichtungen in Kraftfahrzeugen bei Einsatz mehrerer Detektionseinrichtungen zu verringern.

Diese Aufgabe wird erfindungsgemäß durch eine optoelektronische Detektionseinrichtung für ein Kraftfahrzeug mit den Merkmalen des Anspruchs 1 gelöst. Die Aufgabe wird außerdem durch ein Verfahren mit den Merkmalen des Anspruchs 6 gelöst. Schließlich wird die Aufgabe durch ein Kraftfahrzeug mit den Merkmalen des Anspruchs 9 gelöst.

Erfindungsgemäß ist eine Sende- und Empfangseinheit vorgesehen, welche einen zweiten optischen Sender oder gegebenenfalls weitere optische Sender zum Aussenden elektromagnetischer Sendestrahlen in die Umgebung der Detektionseinrichtung aufweist. Der zweite optische Sender der Sende- und Empfangseinheit ist wie der erste optische Sender mit dem Empfänger der Sende- und Empfangseinheit gekoppelt, wodurch ein gemeinsamer Betrieb der optischen Sender mit dem gemeinsamen Empfänger möglich ist. Der zweite optische Sender und die gegebenenfalls weiteren optischen Sender, welche mit dem gemeinsamen Detektor zusammenwirken, können ihre Detektionsmission erfüllen, ohne dass individuelle Empfänger erforderlich sind, welche diesem Sender zugeordnet sein müssten. Nach der Erfindung ist vorgesehen, dass in einer ersten Betriebsart der erste optische Sender aktiviert ist und in einer zweiten Betriebsart der zweite optische Sender aktiviert ist. Die Auswertungselektronik ist dabei derart ausgebildet, dass die empfangenen reflektierten Strahlen einem der optischen Sender zugeordnet werden. Die Auswertungselektronik greift dabei auf die Information zurück, welcher optische Sender aktiv ist und ordnet dem aktiven Sender die vom Empfänger empfangenen Strahlen beziehungsweise die vom Detektor erzeugten Empfangssignale zu.

Der erste optische Sender und der zweite optische Sender sind jeweils unterschiedlichen Detektionsbereichen beziehungsweise Detektionsaufgaben zugeordnet und werden jeweils dann aktiviert, wenn das entsprechende Detektionssystem gewünscht ist. Bei einem Kraftfahrzeug kann beispielsweise der erste optische Sender für Detektionsaufgaben im Umfeld des Kraftfahrzeugs eingesetzt sein, so dass die Sendestrahlen nach Außen abgegeben werden. Der erste optische Sender ist in einem vorteilhaften Ausführungsbeispiel Bestandteil eines Detektionssystems, welches laufend eine Objekterkennung im Umfeld des Kraftfahrzeugs durchführt, beispielsweise eines Laserscanners. Der zweite optische Sender ist dem Innenbereich des Kraftfahrzeugs zugeordnet. Der zweite optische Sender ist gemeinsam mit dem Empfänger Bestandteil eines Innenraumüberwachungssystems, beispielsweise eine Diebstahlalarmüberwachung, ein Gestiksensor oder ein Schaltelement zur Aktivierung von Licht oder eines Schiebedachs. Des Weiteren kann mittels des den Innenraum zugeordneten zweiten optischen Senders eine Sitzbelegerkennung durchgeführt werden, oder eine Airbagsteuerung.

Um die empfangenen Strahlen auf den gemeinsamen Empfänger abzubilden, umfasst die Detektionseinrichtung für wenigstens einen der Detektionsbereiche ein optisches Leitelement, welches an den optischen Empfänger gekoppelt ist. Das Leitelement kann dabei Lichtleiter und/oder Spiegel und/oder ein Prisma umfassen, welche die empfangenen Strahlen zum Empfänger leiten. Insbesondere wird das optische Leitelement dem zweiten optischen Sender im Innenraum des Kraftfahrzeugs zugeordnet, wodurch das optoelektronische Innenraumsystem an den Empfänger gekoppelt ist, welcher baulich dem ersten optischen Sender zugeordnet ist. Der erste optische Sender kann dabei eine gemeinsame Baugruppe mit dem Empfänger bilden. In weiteren Ausführungsformen ist der Empfänger in einer Baugruppe mit dem zweiten optischen Sender ausgebildet, wobei der erste optische Sender über Leitelemente auf den gemeinsamen Empfänger gekoppelt ist. In einer weiteren vorteilhaften Ausführungsform sind sämtliche optischen Sender separate Bauteile, welche über Leitelemente mit dem gemeinsamen Empfänger gekoppelt sind.

Neben der ersten Betriebsart der Detektionseinrichtung, in welcher der erste optische Sender aktiviert ist und der zweiten Betriebsart, in welche der zweite optische Sender aktiviert ist, wird in einer Kombinationsbetriebsart die Detektionsleistung aller optoelektronischen Detektoren während eines Zeitintervalls des Kombinationsbetriebs anteilig dem ersten optischen Sender und dem zweiten optischen Sender zugeordnet. Die Betriebsart wird vorteilhaft in Abhängigkeit von einem Fahrzustandssignal gewählt, welches von der Fahrzeugelektronik zur Verfügung gestellt wird. Das Fahrzustandssignal repräsentiert den aktuellen Fahrzustand des Kraftfahrzeugs, beispielsweise den Stillstand oder die Fahrsituation. Befindet sich das Fahrzeug im Stillstand wird vorzugsweise ausschließlich der zweite optische Sender und damit die Innenraumüberwachung aktiviert, während der erste optische Sender ausgeschaltet ist. Nach dem Start eines Fahrzeugs wird vorteilhaft zunächst nur die Beleuchtung des Innenraums eingeschaltet und anschließend in den Kombinationsbetrieb geschaltet. Im Kombinationsbetrieb werden für jeweilige Zeitintervalle der erste optische Sender oder der zweite optische Sender alternierend aktiviert. Die Empfangssignale sämtlicher Detektoren werden in den jeweiligen Zeitintervallen dem jeweils aktiven optischen Sender zugeordnet.

In einer besonders vorteilhaften Ausführungsform der Erfindung weist der Empfänger mehrere optoelektronische Detektoren auf, welche in mindestens einer Reihe angeordnet sind. Eine solche Reihe wird auch als Array bezeichnet. Die aufgereihte Anordnung der optoelektronischen Detektoren erhöht maßgeblich die Detektionsleistung, welche insbesondere bei der Objekterkennung im Umfeld eines Kraftfahrzeugs gewünscht ist. Über die Anordnung in einer Reihe, das heißt einem Array, sind zudem bei einer entsprechenden Auswertung die Zuordnung eines Elevationswinkels des detektierbaren Bereichs erreicht. Die durch die Länge des Arrays wird die Geometrie des Lichteinfall- und Ausfallwinkels und damit die mittels der Detektionseinrichtung erfassbare Elevation bestimmt.

Die Anordnung mehrere optoelektronischer Detektoren in einer Reihe begünstigt eine weitere vorteilhafte Ausführungsform der Erfindung, wonach im Kombinationsbetrieb die

Empfangssignale einer ersten Gruppe von optoelektronischen Detektoren den ersten optischen Sender zugeordnet werden und die Empfangssignale einer zweiten Gruppe von optoelektronischen Detektoren dem zweiten optischen Sender zugeordnet werden. Anders ausgedrückt werden die zur Verfügung stehenden Detektoren in zwei Gruppen aufgeteilt, wobei die erste Gruppe eine Sende- und Empfangseinheit mit dem ersten optischen Sender bildet. Die zweite Gruppe von optoelektronischen Detektoren wird dem zweiten optischen Sender zugeordnet und bildet somit eine Sende- und Empfangseinheit mit dem zweiten optischen Sender. Dadurch stehen im Kombinationsbetrieb mit einem einzelnen elektronischen Bauteil des Empfängers bei funktionaler Betrachtung zwei Empfängereinheiten mit einer baulichen Empfängereinheit bereit.

Der optoelektronische Detektor kann jede Art von elektronischem Bauelement sein, welches Licht unter Benutzung des Fotoelektrischen Effekts in ein elektrisches Empfangssignal umwandelt. Alternativ kann der optoelektronische Detektor ein elektronisches Bauelement sein, welches einen von der einfallenden Lichtstrahlung abhängigen Widerstand zeigt und insofern ausgewertet werden kann.

Als optoelektronische Detektoren werden vorzugsweise Fotodetektoren wie Avalanche-Photodioden eingesetzt oder beispielsweise PIN-Photodioden.

Ausführungsbeispiele der Erfindung sind nachstehend anhand der Zeichnung näher erläutert. Es zeigen:
- Fig. 1:: eine Seitenansicht eines Kraftfahrzeugs mit einer optoelektronischen Detektionseinrichtung,
- Fig. 2:: ein Funktionsschema einer Detektionseinrichtung mit zwei optischen Sendern und einem gemeinsamen Empfänger,
- Fig. 3:: ein grafisches Schaubild eines Ausführungsbeispiels eines Verfahrens zum Betrieb einer Detektionseinrichtung,
- Fig. 4:: ein Ausführungsbeispiel eines Verfahrens zum Betrieb einer Detektionseinrichtung.

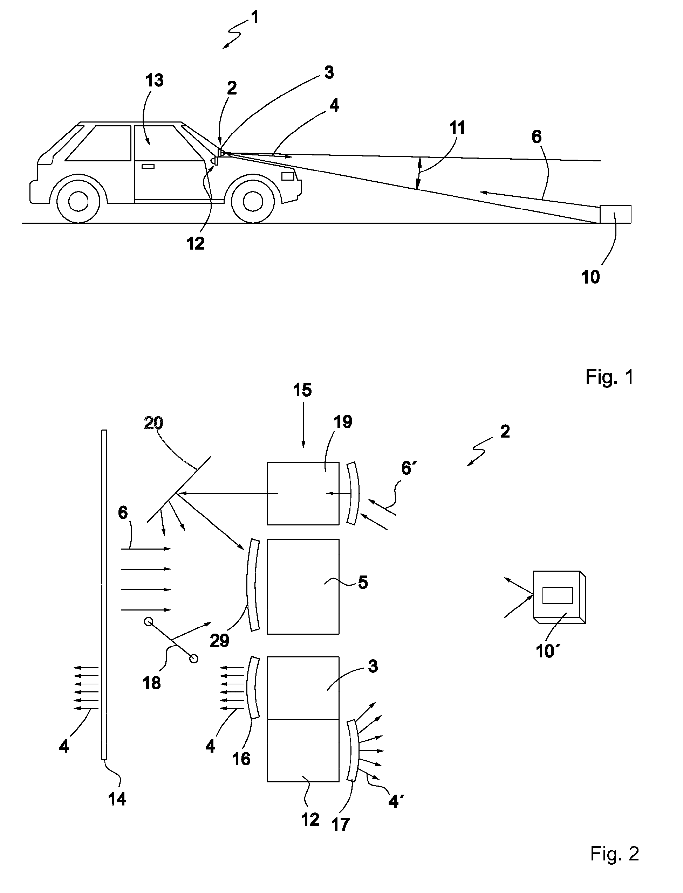

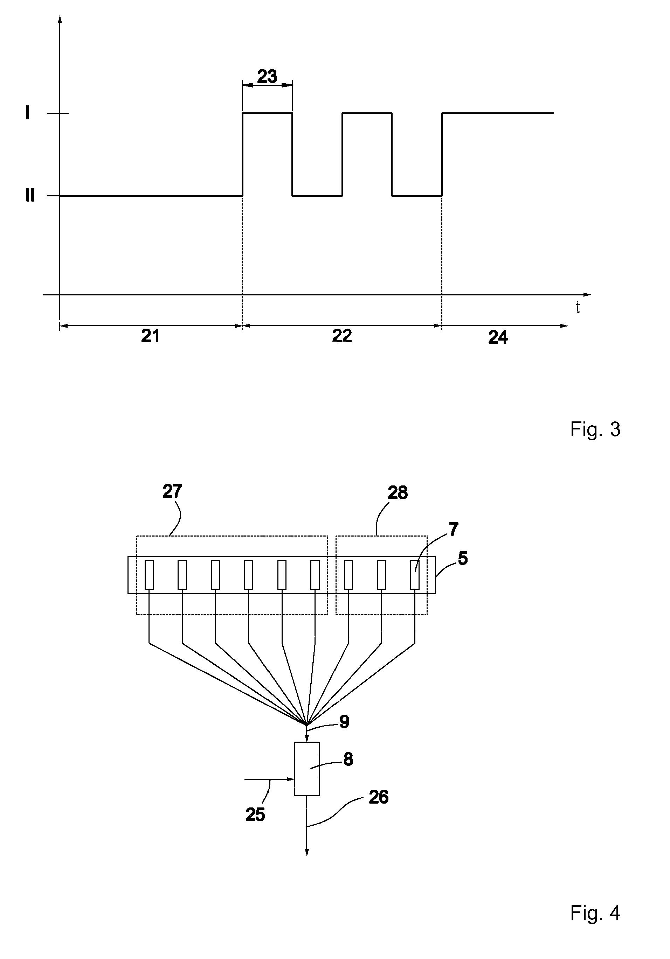

Fig. 1 zeigt ein Kraftfahrzeug 1, welches mit einer optoelektronischen Detektionseinrichtung 2 ausgestattet ist. Die Detektionseinrichtung 2 umfasst eine Sende- und Empfangseinheit, welche einen ersten optischen Sender 3 zum Aussenden elektromagnetischer Sendestrahlen 4 in die Umgebung der Detektionseinrichtung 2 aufweist. Die Sende- und Empfangseinheit der Detektionseinrichtung 2 umfasst außerdem einen optischen Empfänger 5 (Fig. 2, Fig. 4) zum Empfangen von elektromagnetischen Strahlen 6. Der Empfänger 5 weist mehrere optoelektronische Detektoren 7 auf, welche unter der Wirkung von Licht ein elektrisches Signal erzeugen.

Wie in Fig. 4 gezeigt ist, sind die Detektoren 7 in einer Reihe angeordnet (sogenanntes Array). Jeder Detektor 7 ist dabei in der Lage, bei Empfang von Licht ein elektronisches Signal zu erzeugen, welches einer Auswertungselektronik 8 als Empfangssignal 9 zugeführt wird. Die optoelektronischen Detektoren 7 sind als Photodioden ausgebildet, beispielsweise PIN-Photodioden oder Avalanche Photodioden.

Die Sende- und Empfangseinheit, bestehend aus optischem Sender 3 und optischem Empfänger 5, arbeitet nach dem Lichtlaufzeitprinzip. Im gezeigten Ausführungsbeispiel gemäß Fig. 1 ist der erste optische Sender 3 im Frontbereich des Kraftfahrzeugs 1 angeordnet und sendet seine Sendestrahlen 4 in den vor dem Kraftfahrzeug liegenden Umgebungsbereich. Der erste optische Sender 3 ermöglicht in Zusammenwirken mit dem optischen Empfänger eine Objekterkennung im erfassten Detektionsbereich. Ein Objekt 10 im Detektionsbereich reflektiert die Sendestrahlen, wobei zurückgeworfene Strahlen 6 vom Empfänger 5 detektiert werden. Aus der Laufzeit zwischen dem optischen Sender 3 und dem optischen Empfänger 5 werden Rückschlüsse auf die Entfernung des Objekts 10 gezogen. Durch die Anordnung mehrerer Detektoren 7 in einer Reihe (Array) kann eine Detektion in einem durch den Array festgelegten Elevationswinkel 11 erfolgen.

Aus dem Empfangssignal 9 gewinnt die Auswertungselektronik Informationen über die Entfernung und die Position des detektierten Objekts 10 in der Umgebung des Kraftfahrzeugs 1 und stellt sie einem Fahrerassistenzsystem zur Verfügung.

Das System zur Objekterkennung kann anstelle oder alternativ zu der im Ausführungsbeispiel gemäß Fig. 1 gezeigten Anordnung im Frontbereich des Kraftfahrzeugs 1, hier an der Windschutzscheibe 14 des Kraftfahrzeugs 1, auch seitlich angeordnet sein, beispielsweise zur Durchführung einer Totwinkelüberwachung.

Der erste optische Sender 3 ist vorteilhaft ein Laserscanner, welcher Sendestrahlen 4 mittels einer Spiegeleinheit auf die zu vermessende Szene umlenkt, so dass eine Abtastung des Sichtfelds innerhalb eines Abtastwinkelbereichs stattfindet.

Die Detektionseinrichtung 2 des Kraftfahrzeugs 1 umfasst einen zweiten optischen Sender, welcher derart angeordnet ist, dass die Sendestrahlen 4' des zweiten optischen Senders in einem Innenraum 13 des Kraftfahrzeugs 1 abgegeben werden. Wie in Fig. 2 dargestellt ist, bilden der erste optische Sender 3 und der zweite optische Sender 12 mit dem gemeinsamen optischen Empfänger 5 eine Sende- und Empfangseinheit 15. Der erste optische Sender 3 sendet mittels einer Sendeoptik 16 Sendestrahlen 4 durch die Windschutzscheibe 14 in die Umgebung des Kraftfahrzeugs 1. Der zweite optische Sender 3 sendet mittels seiner Sendeoptik 17 Sendestrahlen 4' in den Innenraum des Kraftfahrzeugs 1.

Durch die Windschutzscheibe 4 dringen reflektierte Strahlen 6 zum optischen Empfänger 5 vor und fallen auf die Detektoren des optischen Empfängers 5. Der optische Empfänger 5 umfasst eine Empfangsoptik 29. Je nach Lage des optischen Empfängers 5 ist ein optionales optisches Leitelement 18 angeordnet, welches die reflektierten Strahlen 6 zum Empfänger 5 leitet. Das Leitelement 18 ist ein Spiegel, ein Lichtleiter, ein Prisma oder ähnliches.

Die Detektionseinrichtung 2 weist für den zweiten optischen Sender 2 ein optisches Leitelement 19 auf, welches an den optischen Empfänger 5 gekoppelt ist. Das optische Leitelement 19 umfasst einen Lichtleiter und/oder ein Prisma und/oder einen Spiegel 20. Das optische Leitelement 19 und dessen Elemente, beispielsweise der Spiegel 20, werden so angeordnet und konfiguriert, dass elektromagnetische Strahlen im Innenraum, welche vom zweiten optischen Sender 12 ausgesendet wurden, zum Empfänger 5 geleitet werden und dort empfangbar sind. Die empfangenen Strahlen 6' können an einem Objekt 10' reflektierte Strahlen sein, beispielsweise bei einem Detektionssystem zur Erkennung der Sitzbelegung.

Die Sende- und Empfangseinheit 14 umfasst einen beiden optischen Sendern 3, 12 gemeinsamen optischen Empfänger. In einer ersten Betriebsart der Detektionseinrichtung 2 wird der erste optische Sender 3 aktiviert. In einer zweiten Betriebsart wird der zweite optische Sender 12 aktiviert. Fig. 3 zeigt in einem graphischen Schaubild den zeitlichen Verlauf des Aktivierungsstatus 30 der optischen Sender 3, 12. In einer ersten Betriebsart 24 der Detektionseinrichtung wird der erste optische Sender 3 aktiviert, was in der Darstellung durch das Niveau I des Aktivierungsstatus 30 repräsentiert ist. In einer zweiten Betriebsart 21 wird der zweite optische Sender 12 aktiviert, was durch das Niveau II des Aktivierungsstatus 30 repräsentiert ist. Im Stillstand des Fahrzeugs, beispielsweise unmittelbar beim Start des Kraftfahrzeugs, wird im gezeigten Ausführungsbeispiel zunächst der zweite optische Sender aktiviert und somit die Detektionseinrichtung für ein Zeitintervall in der zweiten Betriebsart 21 betrieben. In einem anschließenden Zeitintervall wird die Detektionseinrichtung in einem Kombinationsbetriebs 22 betrieben, wobei die Detektionsleistung aller optoelektronischen Detektoren anteilig dem ersten optischen Sender und dem zweiten optischen Sender zugeordnet werden.

Im gezeigten Ausführungsbeispiel werden im Kombinationsbetrieb 22 für jeweilige Zeitintervalle 23 der erste optische Sender und der zweite optische Sender alternierend aktiviert. Die Empfangssignale sämtlicher Detektoren wären in den jeweiligen Zeitintervallen 23 dem jeweils aktiven optischen Sender zugeordnet. In der ersten Betriebsart 24, welche im Ausführungsbeispiel gemäß Fig. 3 auf den Kombinationsbetrieb 22 folgt, wird im Zeitintervall der ersten Betriebsart 24 der erste optische Sender aktiviert und somit die Objekterkennung im Umfeld des Kraftfahrzeugs 1 aktiviert.

Die Auswertungselektronik 8 verfügt über eine Aktivierungsinformation 25, welche der Auswertungselektronik 8 anzeigt, welcher optische Sender aktuell aktiviert ist. Anhand des Aktivierungsstatus 25 ordnet die Auswertungselektronik 8 die empfangenen Empfangssignale 9 dem jeweiligen optischen Sender zu und gibt eine Detektionsinformation 26 ab. Je nach dem welcher optische Sender aktiv ist, das heißt für welches Detektionssystem im Außenbereich/Innenraum der Empfänger 5 gewünscht ist, wird der Empfänger bzw. die vom Empfänger bereits gestellten Empfangssignale dem jeweiligen optischen Sender und damit dem durch den jeweiligen Sender repräsentierten Detektionssystem zugeordnet.

Alternativ zur Zuordnung sämtlicher Detektoren entweder zum ersten optischen Sender oder zum zweiten optischen Sender sind die Detektoren 7 in Gruppen zusammengefasst. Dabei wird eine erste Gruppe 27 von Detektoren 7 dem ersten optischen Sender zugeordnet. Die Empfangssignale 9 einer zweiten Gruppe 28 von Detektoren werden dem zweiten optischen Sender zugeordnet. Auf diese Weise ist ein Kombinationsbetrieb der Detektionseinrichtung ermöglicht, bei dem sowohl dem Innenraum zugeordnete Detektionssystem mit dem zweiten optischen Sender als auch das Detektionssystem für Objekte im äußeren Umfeld des Kraftfahrzeugs gleichzeitig betreibbar sind. Beide Systeme können mit einem gemeinsamen Detektor betrieben werden.

Das Detektionssystem für den Innenraum des Kraftfahrzeugs, welches mittels des zweiten optischen Senders aktivierbar ist, wird vorteilhaft für Alarmsysteme, Gestiksensoren, Schaltelemente zur Aktivierung von Licht, Schiebedach oder anderen Anwendungen, zur Airbagsteuerung und/oder für eine Sitzbelegerkennung verwendet.

## Patentansprüche

1. Optoelektronische Detektionseinrichtung, für ein Kraftfahrzeug (1), mit einer Sende- und Empfangseinheit (15), welche einen ersten optischen Sender (3) zum Aussenden elektromagnetischer Sendestrahlen (4) in die Umgebung der Detektionseinrichtung (2), und welche einen optischen Empfänger (5) zum Empfangen von Strahlen (6, 6') aufweist, welcher mindestens einen optoelektronischen Detektor (7) aufweist und einer Auswertungselektronik (8) ein in Abhängigkeit der Strahlen (6, 6') gebildetes Empfangssignal (9) bereit stellt,
**dadurch gekennzeichnet, dass**
die Sende- und Empfangseinheit (15) einen zweiten optischen Sender (12) zum Aussenden elektromagnetischer Sendestrahlen (4') in die Umgebung der Detektionseinrichtung (2) aufweist, welcher einem anderen Detektionsbereich der Umgebung der Detektionseinrichtung (2) zugeordnet ist als der erste optische Sender (3), wobei die Auswertungselektronik (8) derart ausgebildet ist, dass die empfangenen Strahlen (6, 6') einem der optischen Sender (3, 12) zugeordnet werden.

2. Detektionseinrichtung nach Anspruch 1,
**dadurch gekennzeichnet, dass**
der Empfänger (5) mehrere optoelektronische Detektoren (7) aufweist, welche in mindestens einer Reihe angeordnet sind.

3. Detektionseinrichtung nach Anspruch 1 oder 2,
**dadurch gekennzeichnet, dass**
die Detektionseinrichtung (2) für wenigstens einen der Detektionsbereiche ein optisches Leitelement (18, 19) aufweist, welches an den optischen Empfänger (5) gekoppelt ist.

4. Detektionseinrichtung nach Anspruch 3,
**dadurch gekennzeichnet, dass**
das Leitelement (18, 19) Lichtleiter und/oder Spiegel (20) und/oder ein Prisma umfasst.

5. Detektionseinrichtung nach einem der vorhergehenden Ansprüche,
**dadurch gekennzeichnet, dass**
der erste optische Sender (3) Bestandteil eines Laserscanners ist.

6. Verfahren zum Betrieb einer Detektionseinrichtung nach einem der vorhergehenden Ansprüche,
**dadurch gekennzeichnet, dass**
in einer ersten Betriebsart (24) der erste optische Sender (3) aktiviert ist, in einer zweiten Betriebsart (21) der zweite optische Sender (12) aktiviert ist, und dass in einem Kombinationsbetrieb (22) die Detektionsleistung aller optoelektronischen Detektoren (7) während eines Zeitintervalls des Kombinationsbetriebs (22) anteilig dem ersten optischen Sender (3) und dem zweiten optischen Sender (12) zugeordnet werden.

7. Verfahren zum Betrieb einer Detektionseinrichtung nach Anspruch 6,
**dadurch gekennzeichnet, dass**
im Kombinationsbetrieb (22) für jeweilige Zeitintervalle der erste optische Sender (3) oder der zweite optische Sender (12) alternierend aktiviert werden und die Empfangssignale (9) sämtlicher Detektoren (7) in den jeweiligen Zeitintervallen dem jeweils aktiven optischen Sender (3, 12) zugeordnet werden.

8. Verfahren zum Betrieb einer Detektionseinrichtung nach Anspruch 6 oder 7,
**dadurch gekennzeichnet, dass**
im Kombinationsbetrieb (22) die Empfangssignale (9) einer ersten Gruppe (27) von optoelektronischen Detektoren (7) dem ersten optischen Sender (3) zugeordnet werden und die Empfangssignale (9) einer zweiten Gruppe (28) von optoelektronischen Detektoren (7) dem zweiten optischen Sender (12) zugeordnet werden.

9. Kraftfahrzeug mit einer Detektionseinrichtung nach einem der Ansprüche 1 bis 5.

10. Kraftfahrzeug nach Anspruch 9,
**dadurch gekennzeichnet, dass**
der zweite optische Sender (12) derart angeordnet ist, dass Sendestrahlen (4') in einen Innenraum (13) des Kraftfahrzeugs (1) abgebbar sind und der Detektionsbereich im Innenraum (13) liegt.
